# EUROPÄISCHE PATENTSCHRIFT

(11) **EP 3 083 735 B1**
(45) Veröffentlichungstag und Bekanntmachung des Hinweises auf die Patenterteilung: **08.05.2019**
(21) Anmeldenummer: 14809326.3
(22) Anmeldetag: 01.12.2014
(51) Int. Cl.: C08G 18/48, C08G 18/76, C08G 18/40, C08G 18/42

(54) **THERMOPLASTISCHES POLYURETHAN FÜR DICHTUNGSANWENDUNGEN**
THERMOPLASTIC POLYURETHANE FOR SEAL APPLICATIONS
POLYURÉTHANE THERMOPLASTIQUE POUR APPLICATIONS D'ÉTANCHÉITÉ

(30) Priorität: 17.12.2013 DE 102013021027
(43) Veröffentlichungstag der Anmeldung: 26.10.2016
(73) Patentinhaber: Carl Freudenberg KG, 69469 Weinheim (DE)
(72) Erfinder: HIEBER, Jürgen, 34613 Schwalmstadt (DE); FREITAG, Edgar, 34613 Schwalmstadt (DE); GOERRES, Martin Franz, 34613 Schwalmstadt (DE); BURKERT, Mathias, 34613 Schwalmstadt (DE); BARILLAS, Gonzalo, 36304 Alsfeld-Altenburg (DE); JÄCKEL, Jürgen, 34637 Schrecksbach (DE)
(86) Internationale Anmeldenummer: PCT/EP2014/076086
(87) Internationale Veröffentlichungsnummer: WO 2015/090916

(56) Entgegenhaltungen:
- EP-A2- 1 873 178
- WO-A-90/11309
- US-A- 5 001 208
- US-A- 5 013 811

## Beschreibung

Die Erfindung betrifft ein thermoplastisches Polyurethan (TPU) für die Herstellung von technischen Artikeln, wie z.B. Dichtungen, Kupplungssternen, Ventilen und Profilen. Die Erfindung betrifft ferner die Herstellung des erfindungsgemäßen TPU sowie aus ihm gefertigte Dichtungen.

Thermoplastische Polyurethane gehören zur Klasse der thermoplastischen Elastomere. Thermoplastische Elastomere weisen unabhängig von ihrer chemischen Zusammensetzung ein einheitliches Bauprinzip auf. Sie stellen Blockcopolymere dar, bei denen harte Blöcke mit weichen Blöcken in einer Polymerkette verbunden sind. Unter harten Blöcken werden dabei Polymersegmente verstanden, deren Erweichungstemperatur (d. h. Glasübergangstemperatur und/oder Kristallitschmelztemperatur) weit oberhalb der Gebrauchstemperatur liegt. Unter weichen Blöcken werden Polymersegmente mit Erweichungstemperaturen weit unterhalb der Gebrauchstemperatur verstanden. Die harten Blöcke bilden physikalische Vernetzungen zwischen den weichen Polymerblöcken, die während der thermoplastischen Verarbeitung reversibel gespalten und beim Abkühlen neu gebildet werden können. Typische Beispiele für thermoplastische Polyurethane sind Styrol-Butadien-Blockcopolymere mit harten Polystyrol-Blöcken (Glastemperatur ca. 105°C) und weichen Polybutadien-Blöcken (Glastemperatur ca. -90°C).

Thermoplastische Polyurethan-Elastomere (TPU) sind seit langem bekannt. Sie sind aufgrund der Kombination hochwertiger mechanischer Eigenschaften mit den bekannten Vorteilen der kostengünstigen thermoplastischen Verarbeitbarkeit von technischer Bedeutung. Durch die Verwendung unterschiedlicher chemischer Aufbaukomponenten lässt sich eine große Variationsbreite mechanischer Eigenschaften erzielen. Eine Übersicht über TPU, ihre Eigenschaften und Anwendungen wird z.B. in Kunststoffe 68 (1978), Seiten 819 bis 825 oder Kautschuk, Gummi, Kunststoffe 35 (1982), Seiten 568 bis 584 gegeben. TPU weisen üblicherweise als teilkristalline Hartphase das Umsetzungsprodukt eines organischen Diisocyanates mit einem niedermolekularen Diol auf und als amorphe Weichphase das Umsetzungsprodukt eines organischen Diisocyanates mit einem höhermolekularen Diol, beispielsweise einem Polyester-, Polyether- oder Polycarbonatdiol mit Molekulargewichten von üblicherweise 500 bis 5000 g/mol. Über die Polyole lassen sich eine Vielfalt von Eigenschaftskombinationen gezielt einstellen. Zur Beschleunigung der Bildungsreaktion können zusätzlich Katalysatoren zugesetzt werden. Zur Einstellung der Eigenschaften können die Aufbaukomponenten in relativ breiten molaren Verhältnissen variiert werden. Bewährt haben sich in vielen Fällen molare Verhältnisse von Polyolen zu Diisocyanaten zu Kettenverlängerern von 1:3:2 bis 1:10:9. Hierdurch können Produkte im Bereich von 60 Shore A bis 75 Shore D erhalten werden.

Der Aufbau von thermoplastisch verarbeitbaren Polyurethanelastomeren kann schrittweise im Prepolymerdosierverfahren erfolgen. Alternativ kann die Umsetzung im schrittweisen Ester-Split Verfahren, bei dem ein Teil des Polyols mit dem Kettenverlängerer zudosiert wird erfolgen, oder durch die gleichzeitige Reaktion aller Komponenten in einer Stufe, dem sogenannten one-shot-Dosierverfahren oder durch Herstellung in einem Reaktionsextruder.

TPU können kontinuierlich oder diskontinuierlich hergestellt werden. Die bekanntesten technischen Herstellverfahren sind das Bandverfahren (GB 1 057 018 A) und das Extruderverfahren (DE 19 64 834 A, DE 23 02 564 A und DE 20 59 570 A).

Für die Anwendung von TPU in Dichtungen sind unter anderem die folgenden chemischen, statischen und dynamischen Eigenschaften relevant: Die Beständigkeit gegenüber den eingesetzten oder in der Umgebung vorkommenden Medien, die Temperaturbeständigkeit bei hohen Temperaturen, die Flexibilität bei tiefen Temperaturen, Druckbeständigkeit, Extrusionsbeständigkeit, Verschleißverhalten sowie das Relaxationsverhalten. In Polyurethanen werden diese Eigenschaften sehr stark von der Art der eingesetzten Polyole bestimmt. Jede Klasse von Polyolmaterialien bringt aufgrund ihres chemischen Aufbaus bestimmte Vor- und Nachteile mit.

Polyole auf der Basis von Polycarbonaten liefern eine hohe mechanische Beständigkeit und aufgrund des hohen Weichsegment-Schmelzbereiches, welcher durch Polycarbonate erzeugt wird, gute Eigenschaften bei hohen Einsatztemperaturen. Des Weiteren zeigen Polycarbonate eine hervorragende Hydrolysebeständigkeit. Aufgrund der hohen Glasübergangstemperatur von Polycarbonaten sind die Tieftemperatureigenschaften jedoch relativ schlecht. Außerdem sind polycarbonatpolyol-basierte TPU aufgrund der dem Material innewohnenden Neigung zur Kristallisation wenig flexibel.

Polyole auf der Basis von Polycaprolactonen hingegen ermöglichen ein ausgewogenes Eigenschaftsprofil bezüglich Tieftemperatureigenschaften, Hydrolysebeständigkeit und mechanischer Festigkeit, sie erreichen jedoch in keiner der genannten Eigenschaften Spitzenwerte. Da die Esterbindung allerdings in sauren oder alkalischen Medien zur Hydrolyse neigt, sind auf Polycaprolactonpolyolen basierende Polyurethane weniger hydrolysebeständig als Materialien auf der Basis von Polyethern oder Polycarbonaten.

Polyole auf der Basis von durch Polykondensation hergestellten Polyestern zeigen bei tiefen Temperaturen eine hohe Steifigkeit. Außerdem weisen sie eine geringe Hydrolysebeständigkeit auf. Dafür zeigen derartige Polyesterpolyole eine sehr gute Festigkeit sowie sehr gute Verschleiß- und Abriebeigenschaften.

Polyole auf der Basis von Polyethern führen aufgrund der Stabilität der Etherbindung zu einer sehr guten Hydrolysebeständigkeit. Außerdem führt die sehr niedrige Glasübergangstemperatur in Polyetherpolyolen zu im Vergleich mit Polyester- und Polycarbonatpolyolen wesentlich niedrigeren möglichen Einsatztemperaturen und wesentlich besseren Tieftemperatureigenschaften sowie einer höheren Flexibilität. Der Nachteil von Polyetherpolyolen ist jedoch, dass sie von allen bekannten Polyolen zu den geringsten mechanischen Beständigkeiten führen und gleichzeitig sehr schlechte Hochtemperatureigenschaften aufweisen.

Copolymere aus mindestens 2 der genannten Polyolklassen, welche zum Beispiel durch eine stufenweise Polymerisation zweier unterschiedlicher, zu Copolymerisation befähigter Monomere oder durch Anpolymersisation eines unterschiedlichen Monomers an ein bereits bestehendes Polyol erhalten werden können, vereinen die Eigenschaften der eingesetzten Polyolklassen und ermöglichen eine besser kontrollierbare Reaktionsgeschwindigkeit als eine Mischung von zwei unterschiedlichen Polyolen. Des Weiteren führt die Verwendung von Copolymeren zu einer besseren Konstanz bei den Eigenschaften der hergestellten TPU-Materialien als eine vergleichbare Polyolmischung.

US 5 001 208 A beschreibt lineare Polyurethanelastomere hergestellt durch Kombination eines Polycarbonatpolyols, eines Polyetherpolyols und einer festen Diisocyanat-Verbindung. Vorzugsweise wird die Diisocyanat-Verbindung durch Reaktion mit einem Kettenverlängerer modifiziert, um eine DiisocyanatKomponente zu bilden, die bei Raumtemperatur eine Flüssigkeit ist, bevor die Reaktion mit den Polyolen und anderen Kettenverlängerern durchgeführt wird. Es wird beschrieben, dass die erhaltenen Elastomere eine gute Kombination aus hydrolytischer Stabilität, Zähigkeit, Flexibilität und relativ niedriger Verarbeitungstemperatur aufweisen. Diese Druckschrift zielt nicht auf Polyurethanelastomere ab, die in Dichtungsanwendungen eingesetzt werden sollen. Vielmehr sollen die beschriebenen Polyurethanelastomere zur Beschichtung von Geweben eingesetzt werden.

EP 0837083 B1 beschreibt eine wasserdispergierbare Polycarbonat-Polyurethanharzzusammensetzung, erhalten durch Erzeugen einer emulgierten Dispersion eines Urethanpräpolymers mit Isocyanatgruppen an den Enden in Wasser in Gegenwart eines Emulgators, falls erforderlich, und dann Verlängern der Enden mit einer Polyaminverbindung, die 2 oder mehr Aminogruppen und/oder Iminogruppen im Molekül enthält, wobei die zur Herstellung des Urethanpräpolymers verwendete Polyolkomponente ein Polycarbonatpolyol als Teil davon enthält und die Polyisocyanatkomponente mindestens 2 Polyisocyanate umfasst. Diese Druckschrift offenbart kein thermoplastisches Polyurethan. Vielmehr werden wässrige Polyurethan Dispersionen zur Ausrüstung von textilen Fasern beschrieben.

CN 102532462 A beschreibt ein einfach einzufärbendes Polyurethanharz für die Anwendung in synthetischem Leder basierend auf Polyurethan. Diese Druckschrift offenbart ebenfalls kein thermoplastisches Polyurethan.

US 5 013 811 A1 beschreibt lineare Polyurethanelastomere aus einer Polyolkomponente, mindestens zwei Extenderkomponenten und einer Diisocyanatverbindung. Diese werden hergestellt durch Umsetzung der Diisocyanatverbindung mit einer der Extenderkomponenten zu einer modifizierten Diisocyanatkomponente mit einer Funktionalität von etwa 2 vor der Umsetzung dieser modifizierten Komponente mit den anderen Komponenten des Elastomers. Diese Druckschrift betrifft keine thermoplastischen Polyurethane für die Herstellung von Dichtungen, sondern thermoplastische Polyurethane für die Beschichtung von textilen Flächengebilden.

US 2011/0186329 A1 beschreibt ein thermoplastisches Polyurethan mit Ungesättigtheit in seinem polymeren Rückgrat. Die Ungesättigtheit kann im weichen Segment oder im harten Segment oder sowohl im weichen als auch im harten Segment des TPU auftreten. Das thermoplastische Polyurethan kann nach der thermoplastischen Formgebung durch Elektronenstrahlvernetzung in einen Duroplast umgewandelt werden. Erst nach der Elektronenstrahlvernetzung weist das Material chemische Beständigkeit, Dimensionstabilität, gute Setzungseigenschaften, Hitzebeständigkeit, Beständigkeit gegen Oxidation und Kriechbeständigkeit auf.

US 6518389 B1 beschreibt eine thermoplastische Zusammensetzung, die aliphatisches Polyurethan enthält. Die Zusammensetzung ist gekennzeichnet durch einen Gelbwert nach der Verwitterung von weniger als 20 und gute Härte- und Erweichungstemperaturwerte.

Aufgabe der vorliegenden Erfindung war es, ein TPU-Material zu entwickeln, welches möglichst alle oben in Bezug auf die Ausgangsmaterialien genannten positiven Materialeigenschaften im fertigen Material in sich vereint, und gleichzeitig die negativen Materialeigenschaften minimiert oder gänzlich ausschaltet.

Die Aufgabe wurde gelöst durch ein thermoplastisches Polyurethan für die Anwendung in technischen Artikeln, wie Dichtungen, Kupplungssternen, Ventilen und Profilen und insbesondere in Dichtungen für hydraulische und pneumatische Anwendungen, erhältlich durch Umsetzung von Isocyanaten (a) mit einer Polyolkomponente (b), umfassend eine Kombination aus mindestens einem Polyesterdiol (b1), mindestens einem Polyetherdiol (b2) und mindestens einem Polycarbonatdiol (b3), jeweils mit einem Molekulargewicht von 500 bis 5000 g/mol, bevorzugt von 1000 g/mol bis 3000 g/mol und besonders bevorzugt von 1500 g/mol bis 2500 g/mol, sowie Diolen (c) mit einem Molekulargewicht von 62 g/mol bis 500 g/mol, vorzugsweise von 62 g/mol bis 300 g/mol sowie optional einem trifunktionellen Vernetzer (d) mit einem Molekulargewicht von 64 g/mol bis 500 g/mol, vorzugsweise von 64 g/mol bis 300 g/mol, wobeider Mischungsanteil der Polyetherpolyolkomponente an der Polyolkomponente (b) zwischen 20 Mol-% und 40 Mol-% beträgt, der Mischungsanteil der Polycarbonatpolyolkomponente an der Polyolkomponente (b) zwischen 40 Mol-% und 60 Mol-% beträgt, und der Rest der Polyolkomponente (b) von Polyesterpolyol gebildet ist.

Überraschend wurde erfindungsgemäß gefunden, dass durch die oben beschriebene Verwendung eines Weichsegmentes umfassend eine Kombination aus Polyesterdiolen (b1), Polyetherdiolen (b2) und Polycarbonatdiolen (b3) TPU hergestellt werden können, die ein hervorragendes Eigenschaftsprofil insbesondere für die Anwendung im Dichtungsbereich haben.

Praktische Versuche haben ergeben, dass das erfindungsgemäße TPU eine sehr hohe Hydrolyse- und Medienbeständigkeit sowie sehr gute mechanische Eigenschaften im Hoch- und Tieftemperaturbereich, eine sehr gute Dichtheit sowie ein ausgezeichnetes Verschleiß- und Extrusionsverhalten und damit eine sehr lange Lebensdauer aufweist. Insbesondere wurde überraschend gefunden, dass das erfindungsgemäße TPU ein besseres Eigenschaftsprofil zeigt, als es die Extrapolation der Eigenschaften der einzelnen Komponenten vermuten lässt.

Ein wesentliches Merkmal des erfindungsgemäßen TPU ist, dass das Weichsegment eine Kombination aus (b1) Polyesterdiolen, (b2) Polyetherdiolen und (b3) Polycarbonatdiolen enthält. Dabei können bei der Herstellung des TPU die genannten Diole als Gemisch eingesetzt werden, und/oder in Form von Copolymeren hiervon. Die Diole (b1, b2, b3) des Weichsegmentes weisen vorzugsweise ein Molekulargewicht von 500 bis 5000 g/mol und besonders bevorzugt von 1000 g/mol bis 3000 g/mol und insbesondere von 1500 g/mol bis 2500 g/mol auf. Werden die Diole in Form von Copolymeren eingesetzt, so liegen die Molekulargewichte der Copolymere vorzugsweise im Bereich von 500 bis 5000 g/mol , bevorzugt im Bereich von 1000 g/mol bis 3000 g/mol und insbesondere von 1500 g/mol bis 2500 g/mol. Die Einstellung der Molekulargewichte auf die vorgenannten Bereiche ermöglicht eine gute Verarbeitbarkeit des erfindungsgemäßen TPUs, insbesondere im Spritzguss.

Gemäß einer bevorzugten Ausführungsform der Erfindung werden die Diole der Polyolkomponente (b) in Form von Copolymeren eingesetzt. Dabei können die Copolymere aus Kombinationen der Polyolkomponenten (b) untereinander bestehen und/oder andere Polyolkomponenten enthalten. Insbesondere bei der Verwendung eines Copolymers aus Kombinationen der Polyolkomponenten (b) untereinander können die oben beschriebenen Vorteile erhalten werden, nämlich eine verbesserte Kontrollierbarkeit der Reaktionsgeschwindigkeit und eine besseren Konstanz bei den Eigenschaften der hergestellten TPU-Materialien.

Vorzugsweise ist das erfindungsgemäße TPU erhältlich durch die Umsetzung von Isocyanaten (a) mit Polyolkomponente (b), Diol (c) und einem trifunktionellen Vernetzer (d) mit einem Molekulargewicht von 64 g/mol bis 500 g/mol, vorzugsweise von 64 g/mol bis 300 g/mol. Vorteilhaft an der Verwendung des trifunktionellen Vernetzers ist, dass durch eine dreidimensionale Verzweigung innerhalb des Materials die mechanischen Eigenschaften, insbesondere die Zugfestigkeit und der Druckverformungsrest gesteigert werden können.

Erfindungsgemäß beträgt der Mischungsanteil der Polyetherpolyolkomponente an der Polyolkomponente (b) zwischen 20 Mol-% und 40 Mol-%. Der Mischungsanteil der Polycarbonatpolyolkomponente an der Polyolkomponente (b) beträgt erfindungsgemäß zwischen 40 Mol-% und 60 Mol-%. Der Rest der Polyolkomponente (b) wird vorzugsweise von Polyesterpolyol gebildet.

Die mittlere Funktionalität der eingesetzten Diole der Polyolkomponente (b) beträgt vorzugsweise zwischen 1,8 und 2,5, bevorzugt zwischen 1,9 und 2,1 besonders bevorzugt zwischen 1,98 und 2,08.

Die Polykomponente (b) wird vorzugsweise mit einem organischen Diisocyanat (a) oder einer Mischung von mindestens 2 organischen Diisocyanaten (a) mit einer Funktionalität von 1,5 bis 3, bevorzugt von 1,9 bis 2,1 und mit einem niedermolekularen Diol (c) mit einem Molekulargewicht von 62 g/mol bis 500 g/mol, vorzugsweise von 62 g/mol bis 300 g/mol sowie zweckmäßigerweise einem trifunktionellen Vernetzer (d) mit einem Molekulargewicht von 64 g/mol bis 500 g/mol, vorzugsweise von 64 g/mol bis 300 g/mol, zu dem erfindungsgemäßen TPU umgesetzt.

Als organische Diisocyanate (a) kommen beispielsweise aliphatische, cycloaliphatische, araliphatische, heterocyclische und aromatische Diisocyanate in Betracht, wie sie zum Beispiel in Justus Liebigs Annalen der Chemie, 562, Seiten 75 bis 136, beschrieben werden. Im Einzelnen seien beispielhaft genannt: aliphatische Diisocyanate, wie Hexamethylendiisocyanat, cycloaliphatische Diisocyanate, wie Isophorondiisocyanat, 1,4-Cyclohexandiisocyanat, 1-Methyl-2,4- und -2,6-cyclohexan-diisocyanat sowie die entsprechenden Isomerengemische, 4,4'-, 2,4'- und 2,2'-Dicyclohexyl-methandiisocyanat sowie die entsprechenden Isomerengemische und aromatische Diisocyanate, wie 2,4-To-luylendiisocyanat oder 3,3'-Dimethyl-4,4'-biphenyldiisocyanat oder 1,4-Phenylendiisocyanat, Gemische aus 2,4- und 2,6-Toluylendiisocyanat, 4,4'-Diphenylmethandiisocyanat, 2,4'-Diphenylmethandiisocyanat und 2,2'-Diphenylmethandiisocyanat, Gemische aus 2,4'-Diphenylmethandiisocyanat und 4,4'-Diphenylmethandiisocyanat, urethanmodifizierte flüssige 4,4'-Diphenylmethandiisocyanate und/oder 2,4'-Diphenylmethandiisocyanate, 4,4'-Diisocyanatodiphenyl-ethan-(1,2) und 1,5-Naphthylendiisocyanat.

Bevorzugt werden 4,4'-Diphenylmethandiisocyanat, 3,3'-Dimethyl-4,4'-biphenyldiisocyanat und 1,4-Phenylendiisocyanat verwendet, ganz besonders bevorzugt wird 3,3'-Dimethyl-4,4'-biphenyldiisocyanat eingesetzt. Vorteilhaft ist beim Einsatz von 3,3'-Dimethyl-4,4'-biphenyldiisocyanat ist unter anderem die günstige Auswirkung auf die Kristallisationseigenschaften des erhaltenen TPUs.

Die Polyesterdiole (b1) können beispielsweise aus Dicarbonsäuren mit 2 bis 12 Kohlenstoffatomen, vorzugsweise 4 bis 6 Kohlenstoffatomen, und mehrwertigen Alkoholen hergestellt werden. Als Dicarbonsäuren kommen beispielsweise in Betracht: aliphatische Dicarbonsäuren wie Glutarsäure, Adipinsäure, Bernsteinsäure, Korksäure, Azelainsäure und Sebacinsäure, oder aromatische Dicarbonsäuren, wie Phthalsäure, Isophthalsäure und Terephthalsäure. Die Dicarbonsäuren können einzeln oder als Gemische, z.B. in Form einer Bernstein-, Glutar- und Adipinsäuremischung, verwendet werden. Zur Herstellung der Polyesterdiole kann es gegebenenfalls vorteilhaft sein, anstelle der Dicarbonsäuren die entsprechenden Dicarbonsäurederivate, wie Carbonsäurediester mit 1 bis 4 Kohlenstoffatomen im Alkoholrest, beispielsweise Dimethylterephthalat oder Dimethyladipat, Carbonsäureanhydride, beispielsweise Bernsteinsäureanhydrid, Glutarsäureanhydrid oder Phthalsäureanhydrid, oder Carbonsäurechloride zu verwenden. Beispiele für mehrwertige Alkohole sind Glykole mit 2 bis 10, vorzugsweise 2 bis 6 Kohlenstoffatomen, z.B. Ethylenglykol, Diethylenglykol, 1,4-Butandiol, 1,5-Pentandiol, 1,6-Hexandiol, 1,10-Decandiol, 2,2-Dimethyl-1,3-propandiol, 1,3-Propandiol, 2-Methylpropandiol, 1,3,3-Methylpentandiol-1,5 oder Dipropylenglykol. Des Weiteren können Polyesterdiole (b1) auch aus polymerisiertem Polycaprolacton mit einem Molekulargewicht von 500 g/mol bis 5000 g/mol aufgebaut sein. Bevorzugt werden Polyesterdiole (b1) auf der Basis von Polycaprolacton mit einen Molekulargewicht von 1000 g/mol bis 3000 g/mol und besonders bevorzugt von 1500 g/mol bis 2500 g/mol eingesetzt.

Wie oben beschrieben, ist vorteilhaft an der Verwendung von Polyesterdiolen (b1) auf der Basis von Polycaprolacton, dass sie ein ausgewogenes Eigenschaftsprofil bezüglich Tieftemperatureigenschaften, Hydrolysebeständigkeit und mechanischer Festigkeit ermöglichen. Darüber hinaus wurde überraschend gefunden, dass durch die Kombination des Polyesterdiols (b1) auf der Basis von Polycaprolacton mit den beiden anderen Polyolkomponenten (b2) und (b3) die mangelnde Hydrolysebeständigkeit des TPUs, welche üblicherweise durch die Verwendung eines Polyesterdiols (b1) auf der Basis von Polycaprolacton in Kauf genommen werden muss, ausgeglichen werden kann.

Als Komponente (b2) geeignete Polyetherdiole können beispielsweise dadurch hergestellt werden, dass ein oder mehrere Alkylenoxide mit 2 bis 4 Kohlenstoffatomen im Alkylenrest mit einem Startermolekül, das zwei aktive Wasserstoffatome gebunden enthält, umgesetzt werden. Geeignete Alkylenoxide sind z.B.: Ethylenoxid, 1,2-Propylenoxid, Epichlorhydrin und 1,2-Butylenoxid und 2,3-Butylenoxid. Vorzugsweise werden Ethylenoxid, Propylenoxid und Mischungen aus 1,2-Propylenoxid und Ethylenoxid verwendet. Die Alkylenoxide können einzeln, alternierend nacheinander oder als Mischungen eingesetzt werden. Als Startermoleküle in Betracht kommen beispielsweise: Wasser, Aminoalkohole, wie N-Alkyl-diethanolamine, beispielsweise N-Methyl-diethanol-amin und Diole, wie Ethylenglykol, 1,3-Propylenglykol, 1,4-Butandiol und 1,6-Hexandiol. Gegebenenfalls können auch Mischungen von Startermolekülen eingesetzt werden. Geeignete Polyetherole sind ferner die hydroxylgruppenhaltigen Polymerisationsprodukte des Tetrahydrofurans. Besonders bevorzugt werden Polyetherdiole (b2) auf der Basis von Ethylenoxid, Propylenoxid und/oder hydroxylgruppenhaltige Polymerisationsprodukte des Tetrahydrofurans eingesetzt. Die Polyetherdiole (b2) besitzen mittlere Molekulargewichte von 500 bis 5000 g/mol, bevorzugt 1000 g/mol bis 3000 g/mol und besonders bevorzugt von 1500 g/mol bis 2500 g/mol.

Wie oben beschrieben, ist vorteilhaft an der Verwendung von Polyetherdiolen (b2), insbesondere der vorgenannten Polyetherdiole (b2) eine hohe Hydrolysebeständigkeit sowie eine hohe Flexibilität und dadurch bedingt niedrige mögliche Einsatztemperaturen und günstige Tieftemperatureigenschaften. Überraschend konnte gefunden werden, dass durch die Kombination eines Polyetherdiols (b2), insbesondere eines der vorgenannten Polyetherdiole (b2) mit den beiden anderen Polyolkomponenten (b3) und (b1) die oben beschriebenen negativen Eigenschaften von TPUs basierend auf Polyetherdiolen (b2), nämlich die geringe mechanischen Beständigkeit und die ungünstigen Hochtemperatureigenschaften ausgeglichen werden konnten.

Als Komponente (b3) geeignete Polycarbonatdiole können dadurch hergestellt werden, dass mindestens eine Polyolkomponente wie zum Beispiel 1,4-Butandiol, 1,5-Pentandiol, 3-Methyl-1,5-Pentandiol, 1,6-Hexandiol, 2-Methyl-1,8-Oktandiol, 1,9-Nonandiol, oder 1,4-Cyclohexandimethanol mit mindestens einem organischen Carbonat umgesetzt wird, zum Beispiel mit Dimethylcarbonat. Bevorzugt werden Polycarbonatdiole (b3) auf der Basis von 1,6-Hexandiol, 1,9-Nonandiol und/oder 1,5-Pentandiol verwendet werden Bevorzugt werden Polycarbonatdiole (b3) mit einem Molekulargewicht von 500 bis 5000 g/mol, bevorzugt 1000 g/mol bis 3000 g/mol und besonders bevorzugt von 1500 g/mol bis 2500 g/mol eingesetzt.

Wie oben beschrieben, ist vorteilhaft an der Verwendung von Polycarbonatdiolen (b3), insbesondere der vorgenannten Polycarbonatdiole (b3), ihre hohe mechanische Beständigkeit und ihre guten mechanischen Eigenschaften bei hohen Einsatztemperaturen sowie eine hervorragende Hydrolysebeständigkeit. Überraschend konnte gefunden werden, dass durch die Kombination eines Polycarbonatdiols (b3), insbesondere eines der vorgenannten Polycarbonatdiole (b3) mit den beiden anderen Polyolkomponenten (b2) und (b1) im TPU die ungünstigen mechanischen Eigenschaften bei niedrigen Temperaturen, die bei der Verwendung eines Polycarbonatdiols (b3) üblicherweise hingenommen werden müssen, ausgeglichen werden können.

Zweckmäßigerweise sind die Polyole (b1, b2, b3) linear. Dies ist vorteilhaft, da durch den Einsatz linearer Polyole TPU mit guter thermoplastischer Verarbeitbarkeit erhalten werden können.

Erfindungsgemäß wird als Poylol (b) eine Kombination aus mindestens einem Polyesterdiol (b1), mindestens einem Polyetherdiol (b2) und mindestens einem Polycarbonatdiol (b3) eingesetzt. Dies bedeutet, dass die Polyolkomponente (b1) ein oder mehrere Polyesterdiole umfassen kann. Ebenso kann die Polyolkomponente (b2) ein oder mehrere Polyetherdiole und die Polyolkomponente (b3) ein oder mehrere Polycarbontdiole umfassen. Erfindungsgemäß bevorzugt wird jedoch ein Polyol (b) eingesetzt, in der die Polyolkomponenten (b1), (b2), (b3) nur jeweils ein Polyol umfassen.

Zur Herstellung des erfindungsgemäßen TPU werden Kettenverlängerer (c) eingesetzt. Die Kettenverlängerer (c) dienen zum Aufbau der Hartsegmente im TPU. Vorzugsweise werden als Kettenverlängerer (c) Diole mit Molekulargewichten von 62 g/mol bis 500 g/mol bevorzugt 62 g/mol bis 300 g/mol eingesetzt. In Betracht kommen beispielsweise aliphatische, cycloaliphatische und/ oder araliphatische Diole mit 2 bis 14, vorzugsweise 2 bis 10 Kohlenstoffatomen, wie z. B. Ethylenglykol,Propandiol-1,3, Propandiol-1,2, Decandiol-1,10, o-, m-, p-Dihydroxycyclohexan, Diethylenglykol, Dipropylenglykol und vorzugsweise Ethylenglykol, Butandiol-1,4, Hexandiol-1,6 und Bis-(2-hydroxy-ethyl)-hydrochinon, niedermolekulare hydroxylgruppenhaltige Polyalkylenoxide auf Basis Ethylen- und/oder 1,2-Propylenoxid und den vorgenannten Diolen als Startermoleküle.

Bevorzugt werden als Kettenverlängerer (c) 1,4-Butandiol, 1,6-Hexandiol oder 1,4-Di(ß-hydroxyethyl)-hydrochinon eingesetzt. Es können auch Gemische der genannten Kettenverlängerer (c) verwendet werden.

Gemäß einer bevorzugten Ausführungsform der Erfindung werden bei der Herstellung des TPUs trifunktionelle Vernetzer (d) mit einer Funktionalität > 2 eingesetzt. Vorteilhaft an der Verwendung von trifunktionellen Vernetzern (d) ist, dass durch eine dreidimensionale Verzweigung innerhalb des Materials die mechanischen Eigenschaften, insbesondere die Zugfestigkeit und der Druckverformungsrest gesteigert werden können. Praktische Versuche haben ergeben, dass mit Triolen wie 1,2,4-, 1,3,5-Trihydroxy-cyclohexan, Glycerin und/oder Trimethylolpropan besonders gute mechanische Eigenschaften erzielt werden können. Die erfindungsgemäß eingesetzten trifunktionellen Vernetzer (d) können ein Molekulargewicht von 64 g/mol bis 500 g/mol, vorzugsweise von 64 g/mol bis 300 g/mol aufweisen.

Weiterhin können in geringen Mengen auch übliche monofunktionelle Verbindungen, z.B. als Kettenabbrecher oder Entformungshilfen, eingesetzt werden. Beispielhaft genannt seien Alkohole wie Oktanol und Stearylalkohol oder Amine wie Butylamin und Stearylamin.

Zur Herstellung der erfindungsgemäßen TPUs können die Aufbaukomponenten gegebenenfalls in Gegenwart von Katalysatoren, Hilfsmitteln und/oder Zusatzstoffen vorzugsweise in solchen Mengen zur Reaktion gebracht werden, dass das Äquivalenzverhältnis von NCO-Gruppen aus Komponente (a) zur Summe der NCO-reaktiven Gruppen insbesondere der OH- (bzw. NH-)Gruppen der niedermolekularen Verbindungen (c, d) und der Polyole (b1, b2, b3) 0,9:1,0 bis 1,2:1,0 beträgt.

Geeignete Katalysatoren sind beispielsweise die nach dem Stand der Technik bekannten und üblichen tertiären Amine, wie z.B. Triethylamin, Dimethylcyclohexylamin, N-Methylmorpholin, N,N'-Dimethylpiperazin, 2-(Dimethylamino-ethoxy)-ethanol, Diazabicyclo-(2,2,2)-octan und ähnliche sowie insbesondere organische Metallverbindungen wie Titansäureester, Eisenverbindungen, Zinnverbindungen, z.B. Zinndiacetat, Zinndioctoat, Zinndilaurat oder die Zinndialkylsalze aliphatischer Carbonsäuren wie Dibutylzinndiacetat, Dibutylzinndilaurat oder ähnliche. Bevorzugte Katalysatoren sind tertiäre Amine wie z.B. Diazabicyclo-(2,2,2)-octan. Die Gesamtmenge an Katalysatoren in den TPU beträgt in der Regel etwa 0 bis 5 Gew.%, bevorzugt 0 bis 1 Gew.%, bezogen auf die Gesamtmenge TPU.

Die Verwendung von tertiären Aminen als Katalysatoren ist vorteilhaft, weil diese Katalysatorklasse keinerlei problematische Schwermetalle als katalytisch aktive Substanz enthält.

Neben den Reaktionskomponenten und den Katalysatoren können auch Hilfsmittel und/oder Zusatzstoffe bis zu 20 Gew.%, bezogen auf die Gesamtmenge TPU, zugesetzt werden. Sie können in einer der Reaktionskomponenten, vorzugsweise in den Polyolkomponenten (b1, b2, b3) gelöst werden oder auch ggf. nach erfolgter Reaktion in einem nachgeschalteten Mischaggregat, wie z.B. einem Extruder, zudosiert werden. Weiterhin geeignet sind Feststoffe wie Fasern oder Festschmierstoffe oder flüssige Schmierstoffe oder Additive, welche die Eigenschaften wie Festigkeit, Verschleiß, Reibung, Dichtheit etc. in der jeweiligen Anwendung den Erfordernissen anpassen.

Als Beispiel seien hier Gleitmittel, wie Fettsäureester, deren Metallseifen, Fettsäureamide, Fettsäureesteramide und Siliconverbindungen, Antiblockmittel, Inhibitoren, Stabilisatoren gegen Hydrolyse, Licht, Hitze und Verfärbung, Flammschutzmittel, Farbstoffe, Pigmente, anorganische und/oder organische Füllstoffe und Verstärkungsmittel genannt. Verstärkungsmittel sind insbesondere faserartige Verstärkungsstoffe wie z.B. anorganische Fasern, die nach dem Stand der Technik hergestellt werden und auch mit einer Schlichte beaufschlagt sein können. Nähere Angaben über die genannten Hilfs- und Zusatzstoffe sind der Fachliteratur, zum Beispiel der Monographie von J.H. Saunders und K.C. Frisch "High Polymers", Band XVI, Polyurethane, Teil 1 und 2, Verlag Interscience Publishers 1962 bzw. 1964, dem Taschenbuch für Kunststoff-Additive von R. Gächter u. H. Müller (Hanser Verlag München 1990) oder der DE 29 01 774 A1 zu entnehmen.

Weitere Zusätze, die in das TPU eingearbeitet werden können, sind Thermoplaste, wie beispielsweise Polycarbonate, Polyethylene, PTFE und Acrylnitril/Butadien/Styrol-Terpolymere, insbesondere ABS. Ebenfalls können andere Elastomere wie Kautschuk, Ethylen/Vinylacetatcopolymere, Styrol/Butadiencopolymere sowie andere TPUs verwendet werden. Weiterhin zur Einarbeitung geeignet sind handelsübliche Weichmacher.

Ein weiterer Gegenstand der vorliegenden Erfindung umfasst ein Verfahren zur Herstellung eines thermoplastischen Polyurethans umfassend die Schritte
(A) Herstellung eines Gemisches umfassend eine Kombination aus Polyesterdiolen (b1), Polyetherdiolen (b2) und Polycarbonatdiolen (b3), jeweils mit einem Molekulargewicht von 500 bis 5000 g/mol; wobei der Mischungsanteil der Polyetherpolyolkomponente an der Polyolkomponente (b) zwischen 20 Mol-% und 40 Mol-% beträgt, der Mischungsanteil der Polycarbonatpolyolkomponente an der Polyolkomponente (b) zwischen 40 Mol-% und 60 Mol-% beträgt, und der Rest der Polyolkomponente (b) von Polyesterpolyol gebildet ist;
(B)Zugabe eines organischen Diisocyanats (a) zu dem Gemisch gemäß (A) in einer solchen Menge, dass das Äquivalenzverhältnis von NCO-Gruppen zu NCO-reaktiven Gruppen von 2,5:1 bis 10:1 beträgt;
(C)Umsetzung der in Stufe (B) hergestellten Reaktionsmischung bei Temperaturen von > 80°C zu einem NCO-terminierten Prepolymer;
(D) Umsetzung des in Stufe(C) hergestellten NCO-terminierten Prepolymers mit einem oder mehreren Kettenverlängerern (c) mit einem Molekulargewicht von 62 g/mol bis 500 g/mol zu einem thermoplastischen Polyurethan, wobei die Komponenten (c) in einer solchen Menge eingesetzt wird, dass unter Berücksichtigung aller Komponenten ein Äquivalenzverhältnis von NCO-Gruppen zu NCO-reaktiven Gruppen von 0,9:1,0 bis 1,2:1,0 eingestellt wird.

Die Herstellung des erfindungsgemäßen Polyurethans kann beispielsweise im Prepolymerverfahren erfolgen, alternativ sind auch das one shot-Verfahren, das Ester-Split-Verfahren oder die Herstellung an einem Reaktivextruder möglich.

Zweckmäßigerweise wird in Schritt (A) des oben beschriebenen Herstellungsverfahrens eine Mischung aus linearen Polyolen gemäß (b1), (b2) und (b3), vorzugsweise mit einer Funktionalität von 1,8 und 2,5, vorgelegt. Dies erfolgt vorzugsweise bei einer Temperatur oberhalb des Schmelzpunktes der eingesetzten Polyole, üblicherweise in einem Temperaturbereich von 80 °C bis 150 °C.

In den Schritten (B) bzw. (C) wird die Polyolmischung mit der Gesamtmenge oder einer Teilmenge des organischen Diisocyanats (a) oder einer Mischung von mehreren organischen Diisocyanaten (a) in einem molaren NCO/OH-Verhältnis von 2,5:1 bis 10:1,in einem Schritt oder in mehreren Schritten bei Temperaturen > 80 °C zu einem höhermolekularen isocyanatterminierten Prepolymer umgesetzt.

In Schritt (D) wird das erhaltene Prepolymer mit einem oder mehreren Diol-Kettenverlängerern gemäß (c) zu einem Polyurethan umgesetzt.

Gemäß einer bevorzugten Ausführungsform der Erfindung wird in den Schritten (B) und/oder (D) ein trifunktioneller Vernetzer (d) mit einem Molekulargewicht von 64 bis 350 g/mol zugegeben.

Das fertige TPU kann in den herkömmlichen Verfahren zur Verarbeitung von TPU (Spritzguss, Extrusion, Gießen) zu technischen Artikeln verarbeitet werden. Praktische Versuche haben gezeigt, dass sich das erfindungsgemäße TPU aufgrund seines spezifischen Eigenschaftsprofils besonders gut für die Herstellung von Dichtungen, Kupplungssternen, Ventilen und Profilen eignet. Als besonders geeignet hat es sich für die Herstellung von Dichtungen und besonders bevorzugt von Dichtungen für hydraulische und pneumatische Anwendungen erwiesen.

Aus den erfindungsgemäßen TPU hergestellte Bauteile weisen eine deutlich gesteigerte Hydrolyse- und Medienbeständigkeit sowie verbesserte mechanische Eigenschaften im Hoch- und Tieftemperaturbereich, verbesserte Dichtheit sowie ein deutlich verbessertes Verschleiß- und Extrusionsverhalten und damit eine deutlich längere Lebensdauer auf.

Vor diesem Hintergrund ist ein weiterer Gegenstand der vorliegenden Erfindung auf Dichtungen, insbesondere für hydraulische und pneumatische Anwendungen umfassend das erfindungsgemäße TPU gerichtet.

Die Erfindung soll anhand der nachfolgenden Beispiele näher erläutert werden.

### Beispiel 1:

### Herstellung eines erfindungsgemäßen TPU

**Verwendete Rohstoffe**

| | |
|---|---|
| Desmophen C 2201 | Polycarbonatpolyol mit einem Molekulargewicht von 2000 g/ mol |
| Terathane 2000 | Polyetherpolyol mit einem Molekulargewicht von 2000 g/mol |
| Capa 2200 | Polyesterpolyol mit einem Molekulargewicht von 2000 g/ mol |
| TODI | 3,3'-Dimethyl-4,4'-Biphenyldiisocyanat |

### 1,4 Butandiol

In einem Reaktionsgefäß werden die Polyole bei 135 °C aufgeschmolzen und unter Rühren vorgemischt. Nach dem Mischen der Polyole wird die Gesamtmenge Isocyanat zugegeben. Nach 15 Minuten Reaktionszeit wird das 1,4-Butandiol zugegeben und die gesamte Mischung 30 s lang intensiv gerührt. Das fertige TPU wird in Platten auf einen auf 130°C temperierten Heiztisch gegossen und dort für 10 Minuten ausgehärtet. Die fertigen TPU-Platten werden anschließend in einem Heißluftofen für 12 h bei 110°C nachgetempert und danach granuliert. Das Granulat wird an einer Spritzgussmaschine zu Dichtungen weiterverarbeitet.

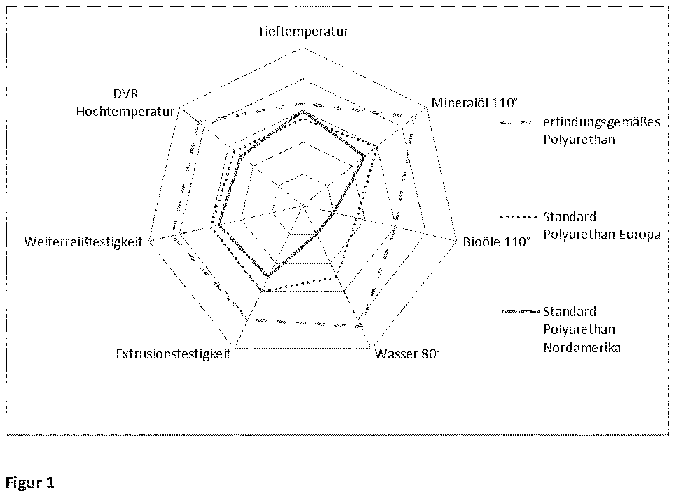

Im Vergleich mit einem Standard-Polyurethan, welches nur mit einem Polycaprolacton-Polyol hergestellt wurde, weist das erfindungsgemäße Material deutlich verbesserter mechanische und chemische Eigenschaften auf. In Figur 1 ist ein Vergleich ausgesuchter Eigenschaften des erfindungsgemäßen Polyurethans mit zwei konventionellen Polyurethanen, bei denen das Weichsegment nur auf einem Polyol, nämlich Polycaprolacton basiert, gezeigt.

Wie in Figur 1 dargestellt, zeigt das erfindungsgemäße Polyurethan gegenüber heißem Wasser, gegenüber heißen Mineralölen und gegenüber heißen Bioölen eine deutlich bessere Beständigkeit als die beiden Standardmaterialien. Auch bei der Extrusionsfestigkeit und bei der Weiterreißfestigkeit ist das erfindungsgemäße Polyurethan den Standardmaterialien deutlich überlegen. Bei den Tieftemperatureigenschaften und dem Druckverformungsrest ist der Zugewinn an Performance nicht ganz so groß, aber auch hier zeigt das erfindungsgemäße Polyurethan bessere Eigenschaften als die beiden Vergleichsmaterialien. Neben diesem allgemeinen Vergleich soll insbesondere auf die Lebensdauer des erfindungsgemäßen Polyurethans eingegangen werden.

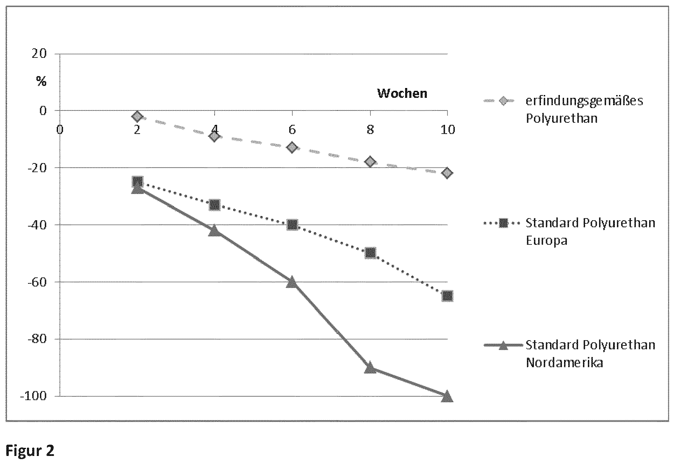

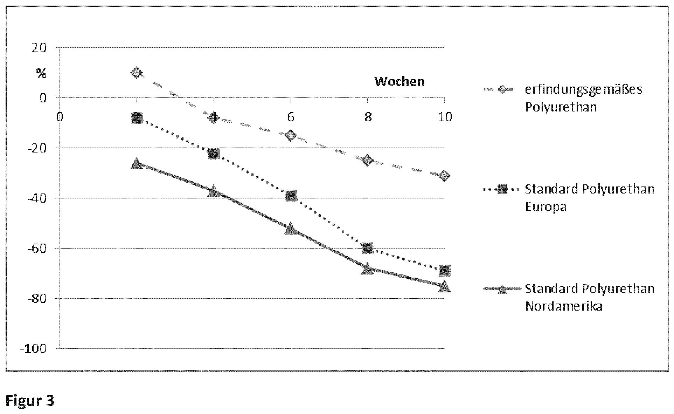

Dazu sind in den Figuren 2 und 3 die Veränderung der Zugfestigkeit bei der Lagerung in 80 °C warmen Wasser und in 110°C heißem Shell Tellus 46 Hydrauliköl gezeigt.

Wie aus Figur 2 und Figur 3 hervorgeht, fällt die Veränderung der Zugfestigkeit in beiden Lagerungsmedien beim erfindungsgemäßen Material wesentlich geringer aus, als bei den beiden zum Vergleich angegebenen Standard Polyurethanen.

Die mögliche Lebensdauer von Produkten wie beispielsweise Dichtungen aus dem erfindungsgemäßen Polyurethan ist damit beim Einsatz in wässriger Umgebung und in Hydraulikanwendungen deutlich höher als bei den zum Vergleich angegebenen Standardmaterialien.

## Patentansprüche

1. Thermoplastisches Polyurethan, erhältlich durch Umsetzung von
(a) Isocyanaten mit einer
(b) Polyolkomponente umfassend mindestens ein Polyesterdiol (b1), mindestens ein Polyetherdiol (b2) und mindestens ein Polycarbonatdiol (b3), jeweils mit einem Molekulargewicht von 500 bis 5000 g/mol, sowie
(c) mindestens einem Diol mit einem Molekulargewicht von 62 g/mol bis 500 g/mol, wobei
der Mischungsanteil der Polyetherpolyolkomponente an der Polyolkomponente (b) zwischen 20 Mol-% und 40 Mol-% beträgt, der Mischungsanteil der Polycarbonatpolyolkomponente an der Polyolkomponente (b) zwischen 40 Mol-% und 60 Mol-% beträgt, und der Rest der Polyolkomponente (b) von Polyesterpolyol gebildet ist.

2. Thermoplastisches Polyurethan gemäß Anspruch 1, erhältlich durch die Umsetzung der Komponenten (a) und (b) mit dem Diol (c) und einem trifunktionellen Vernetzer (d) mit einem Molekulargewicht von 64 g/mol bis 500 g/mol.

3. Thermoplastisches Polyurethan gemäß Anspruch 1 oder 2, **dadurch gekennzeichnet dass** das Molekulargewicht der Polyolkomponente (b) im Bereich von 1000 g/mol bis 3000 g/mol liegt.

4. Thermoplastisches Polyurethan gemäß einem oder mehreren der Ansprüche 1 bis 3, **dadurch gekennzeichnet dass** mindestens zwei Diole der Polyolkomponente (b) als Copolymer mit einem Molekulargewicht von 500 bis 5000 g/mol, vorzugsweise von 1000 g/mol bis 3000 g/mol vorliegen.

5. Thermoplastisches Polyurethan gemäß einem oder mehreren der Ansprüche 1 bis 5, **dadurch gekennzeichnet dass** als Polyesterdiole (b1) Diole mit einen Molekulargewicht von 1500 bis 2500 eingesetzt werden.

6. Thermoplastisches Polyurethan gemäß einem oder mehreren der Ansprüche 1 bis 6, **dadurch gekennzeichnet dass** als Polyesterdiole (b1) Diole auf der Basis von Polycaprolacton eingesetzt werden.

7. Thermoplastisches Polyurethan gemäß einem oder mehreren der Ansprüche 1 bis 7, **dadurch gekennzeichnet dass** als Polyetherdiole (b2) Diole mit einen Molekulargewicht von 1500 g/mol bis 2500 g/mol eingesetzt werden.

8. Thermoplastisches Polyurethan gemäß einem oder mehreren der Ansprüche 1 bis 8, **dadurch gekennzeichnet dass** als Polyetherdiole (b2) Diole auf der Basis von Ethylenoxid, Propylenoxid und/oder hydroxylgruppenhaltige Polymerisationsprodukte des Tetrahydrofurans eingesetzt werden.

9. Thermoplastisches Polyurethan gemäß einem oder mehreren der Ansprüche 1 bis 9, **dadurch gekennzeichnet dass** als Polycarbonatdiole (b3) Diole mit einen Molekulargewicht von 1500 g/mol bis 2500 g/mol eingesetzt werden.

10. Thermoplastisches Polyurethan gemäß einem oder mehreren der Ansprüche 1 bis 9, **dadurch gekennzeichnet dass** Polycarbonatdiole (b3) Diole auf der Basis von 1,6-Hexandiol, 1,9-Nonandiol und/oder 1,5-Pentandiol verwendet werden.

11. Verfahren zur Herstellung eines thermoplastisches Polyurethans gemäß einem oder mehreren der Ansprüche 1 bis 10, umfassend die folgenden Schritte:
(A) Herstellung eines Gemisches umfassend eine Kombination aus mindestens einem Polyesterdiol (b1), mindestens einem Polyetherdiol (b2) und mindestens einem Polycarbonatdiol (b3), jeweils mit einem Molekulargewicht von 500 bis 5000 g/mol;
(B) Zugabe eines organischen Diisocyanats (a) zu dem Gemisch gemäß (A) in einer solchen Menge, dass das Äquivalenzverhältnis von NCO-Gruppen zu NCO-reaktiven Gruppen von 2,5:1 bis 10:1 beträgt;
(C) Umsetzung der in Stufe (B) hergestellten Reaktionsmischung bei Temperaturen von > 80°C zu einem NCO-terminierten Prepolymer;
(D) Umsetzung des in Stufe(C) hergestellten NCO-terminierten Prepolymers mit einem oder mehreren Kettenverlängerern (c) mit einem Molekulargewicht von 62 g/mol bis 500 g/mol zu einem thermoplastischen Polyurethan, wobei die Komponente (c) in einer solchen Menge eingesetzt wird, dass unter Berücksichtigung aller Komponenten ein Äquivalenzverhältnis von NCO-Gruppen zu NCO-reaktiven Gruppen von 0,9:1,0 bis 1,2:1,0 eingestellt wird.

12. Verwendung eines thermoplastischen Polyurethans gemäß einem oder mehreren der Ansprüche 1 bis 10 zur Herstellung von Formkörpern, insbesondere Dichtungen, Kupplungssternen, Ventilen und Profilen.

13. Verwendung nach Anspruch 12 zur Herstellung von Dichtungen.

14. Verwendung nach Anspruch 12 oder 13 zur Herstellung von Dichtungen für hydraulische und pneumatische Anwendungen.

## Claims

1. Thermoplastic polyurethane obtainable by reaction of
(a) isocyanates with a
(b) polyol component comprising
at least one polyester diol (b1), at least one polyether diol (b2) and at least one polycarbonate diol (b3), each with a molecular weight in the range from 500 to 5000 g/mol, and also with
(c) at least one diol having a molecular weight of 62 g/mol to 500 g/mol, wherein
the polyether polyol component comprises between 20 mol% and 40 mol% of polyol component (b), the polycarbonate polyol component comprises between 40 mol% and 60 mol% of polyol component (b), the rest of polyol component (b) being formed by polyester polyol.

2. Thermoplastic polyurethane according to Claim 1, obtainable by the reaction of components (a) and (b) with the diol (c) and a trifunctional crosslinker (d) having a molecular weight of 64 g/mol to 500 g/mol.

3. Thermoplastic polyurethane according to Claim 1 or 2, **characterized in that** the molecular weight of the polyol component (b) is in the range from 1000 g/mol to 3000 g/mol.

4. Thermoplastic polyurethane according to one or more of Claims 1 to 3, **characterized in that** at least two diols of polyol component (b) take the form of a copolymer having a molecular weight of 500 to 5000 g/mol, preferably of 1000 g/mol to 3000 g/mol.

5. Thermoplastic polyurethane according to one or more of Claims 1 to 5, **characterized in that** diols having a molecular weight of 1500 to 2500 are used as polyester diols (b1).

6. Thermoplastic polyurethane according to one or more of Claims 1 to 6, **characterized in that** diols based on polycaprolactone are used as polyester diols (b1).

7. Thermoplastic polyurethane according to one or more of Claims 1 to 7, **characterized in that** diols having a molecular weight of 1500 g/mol to 2500 g/mol are used as polyether diols (b2).

8. Thermoplastic polyurethane according to one or more of Claims 1 to 8, **characterized in that** hydroxyl-containing products of polymerizing tetrahydrofuran and/or diols based on ethylene oxide and/or propylene oxide are used as polyether diols (b2).

9. Thermoplastic polyurethane according to one or more of Claims 1 to 9, **characterized in that** diols having a molecular weight of 1500 g/mol to 2500 g/mol are used as polycarbonate diols (b3).

10. Thermoplastic polyurethane according to one or more of Claims 1 to 9, **characterized in that** diols based on 1,6-hexanediol, 1,9-nonanediol and/or 1,5-pentanediol are used as polycarbonate diols (b3) .

11. Process for preparing a thermoplastic polyurethane according to one or more of Claims 1 to 10, comprising the steps of:
(A) preparing a mixture comprising a combination of at least one polyester diol (b1), at least one polyether diol (b2) and at least one polycarbonate diol (b3), each with a molecular weight in the range from 500 to 5000 g/mol;
(B) admixing an organic diisocyanate (a) to the mixture as per (A) in such an amount that the equivalence ratio of NCO groups to NCO-reactive groups is in the range from 2.5:1 to 10:1;
(C) converting the reaction mixture obtained in step (B) into an NCO-terminated prepolymer at temperatures of > 80°C;
(D) reacting the NCO-terminated prepolymer obtained in step (C) with one or more chain extenders (c) having a molecular weight of 62 g/mol to 500 g/mol into a thermoplastic polyurethane, wherein component (c) is used in such an amount that across all components an equivalence ratio of NCO groups to NCO-reactive groups in the range from 0.9:1.0 to 1.2:1.0 is set.

12. Use of a thermoplastic polyurethane according to one or more of Claims 1 to 10 for production of shaped articles, in particular seals, coupling stars, valves and profiles.

13. Use according to Claim 12 for production of seals.

14. Use according to Claim 12 or 13 for production of seals for hydraulic and pneumatic applications.

## Revendications

1. Polyuréthane thermoplastique pouvant être obtenu par transformation
(a) d'isocyanates avec
(b) un composant polyol comprenant au moins un polyesterdiol (b1), au moins un polyétherdiol (b2) et au moins un polycarbonatediol (b3), présentant chacun un poids moléculaire de 500 à 5000 g/mole, ainsi que
(c) au moins un diol présentant un poids moléculaire de 62 g/mole à 500 g/mole,
la proportion dans le mélange du composant polyétherpolyol par rapport au composant polyol (b) étant située entre 20% en mole et 40% en mole, la proportion dans le mélange du composant polycarbonatepolyol par rapport au composant polyol (b) étant située entre 40% en mole et 60% en mole et le reste du composant polyol (b) étant formé par du polyesterpolyol.

2. Polyuréthane thermoplastique selon la revendication 1, pouvant être obtenu par la transformation des composants (a) et (b) avec le diol (c) et avec un réticulant trifonctionnel (d) présentant un poids moléculaire de 64 g/mole à 500 g/mole.

3. Polyuréthane thermoplastique selon la revendication 1 ou 2, **caractérisé en ce que** le poids moléculaire du composant polyol (b) se situe dans la plage de 1000 g/mole à 3000 g/mole.

4. Polyuréthane thermoplastique selon l'une ou plusieurs des revendications 1 à 3, **caractérisé en ce qu'**au moins deux diols du composant polyol (b) se trouvent sous forme de copolymère présentant un poids moléculaire de 500 à 5000 g/mole, de préférence de 1000 g/mole à 3000 g/mole.

5. Polyuréthane thermoplastique selon l'une ou plusieurs des revendications 1 à 5, **caractérisé en ce que** des diols présentant un poids moléculaire de 1500 à 2500 sont utilisés comme polyesterdiols (b1).

6. Polyuréthane thermoplastique selon l'une ou plusieurs des revendications 1 à 6, **caractérisé en ce que** des diols à base de polycaprolactone sont utilisés comme polyesterdiols (b1).

7. Polyuréthane thermoplastique selon l'une ou plusieurs des revendications 1 à 7, **caractérisé en ce que** des diols présentant un poids moléculaire de 1500 g/mole à 2500 g/mole sont utilisés comme polyétherdiols (b2).

8. Polyuréthane thermoplastique selon l'une ou plusieurs des revendications 1 à 8, **caractérisé en ce que** des diols à base d'oxyde d'éthylène, d'oxyde de propylène et/ou de produits de polymérisation contenant des groupes hydroxyle du tétrahydrofuranne sont utilisés comme polyétherdiols (b2).

9. Polyuréthane thermoplastique selon l'une ou plusieurs des revendications 1 à 9, **caractérisé en ce que** des diols présentant un poids moléculaire de 1500 g/mole à 2500 g/mole sont utilisés comme polycarbonatediols (b3).

10. Polyuréthane thermoplastique selon l'une ou plusieurs des revendications 1 à 9, **caractérisé en ce que** des diols à base de 1,6-hexanediol, de 1,9-nonanediol et/ou de 1,5-pentanediol sont utilisés comme polycarbonatediols (b3).

11. Procédé pour la préparation d'un polyuréthane thermoplastique selon l'une ou plusieurs des revendications 1 à 10, comprenant les étapes suivantes :
(A) préparation d'un mélange comprenant une combinaison d'au moins un polyesterdiol (b1), d'au moins un polyétherdiol (b2) et d'au moins un polycarbonatediol (b3), présentant chacun un poids moléculaire de 500 à 5000 g/mole ;
(B) addition d'un diisocyanate organique (a) au mélange selon (A) en une quantité telle que le rapport des équivalents de groupes NCO aux groupes réactifs avec NCO est de 2,5:1 à 10:1;
(C) transformation du mélange réactionnel préparé dans l'étape (B) à des températures > 80°C en un prépolymère terminé par NCO ;
(D) transformation du prépolymère terminé par NCO préparé dans l'étape (C) avec un ou plusieurs agents d'allongement de chaîne (c) présentant un poids moléculaire de 62 g/mole à 500 g/mole en un polyuréthane thermoplastique, le composant (c) étant utilisé en une quantité telle que, tenant compte de tous les composants, un rapport d'équivalents de groupes NCO aux groupes réactifs avec NCO de 0,9:1,0 à 1,2:1,0 se règle.

12. Utilisation d'un polyuréthane thermoplastique selon l'une ou plusieurs des revendications 1 à 10 pour la fabrication de corps moulés, en particulier de joints, d'embouts d'accouplement, de soupape et de profilés.

13. Utilisation selon la revendication 12 pour la fabrication de joints.

14. Utilisation selon la revendication 12 ou 13 pour la fabrication de joints pour des applications hydrauliques et pneumatiques.
